(19) Europäisches Patentamt
European Patent Office
Office européen des brevets

(11) Veröffentlichungsnummer: **0 106 047**
**B1**

(12) # EUROPÄISCHE PATENTSCHRIFT

(45) Veröffentlichungstag der Patentschrift: **23.10.85**

(51) Int. Cl.⁴: **C 07 F 7/18,** C 09 D 3/64, C 08 F 299/04

(21) Anmeldenummer: **83107758.1**

(22) Anmeldetag: **06.08.83**

(54) **Olefinisch ungesättigte Siloxane, Verfahren zu ihrer Herstellung und ihre Verwendung als Reaktivverdünner für radikalisch vernetzbare Lacksysteme.**

(30) Priorität: **19.08.82 DE 3230867**

(43) Veröffentlichungstag der Anmeldung: **25.04.84 Patentblatt 84/17**

(45) Bekanntmachung des Hinweises auf die Patenterteilung: **23.10.85 Patentblatt 85/43**

(84) Benannte Vertragsstaaten: **AT DE FR GB IT NL SE**

(56) Entgegenhaltungen:
**FR - A - 2 175 228**
**US - A - 3 369 006**

(73) Patentinhaber: **BAYER AG, Konzernverwaltung RP Patentabteilung, D-5090 Leverkusen 1 Bayerwerk (DE)**

(72) Erfinder: **Eimers, Erich, Dr., Kreuzbergstrasse 136, D-4150 Krefeld (DE)**
Erfinder: **Reuter, Knud, Dr., Buschstrasse 149, D-4150 Krefeld (DE)**
Erfinder: **Dhein, Rolf, Dr., Deswatinesstrasse 30, D-4150 Krefeld (DE)**

**EP 0 106 047 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Siloxane mit copolymerisierbaren Gruppen, ein Verfahren zu ihrer Herstellung und ihre Verwendung als Reaktivverdünner für radikalisch polymerisierbare Lacksysteme, insbesondere für lufttrocknende Alkydharze.

Reaktivverdünner sind niedrigviskose Stoffe, die harzartige Bindemittel verdünnen und dadurch dem Lack die zu seiner Anwendung notwendige Viskosität verleihen, zur Mischpolymerisation oder Mischkondensation mit dem Lackharz befähigte funktionelle Gruppen enthalten und beim Härtungsvorgang zum überwiegenden Teil — jeweils in Abhängigkeit von ihrer Flüchtigkeit — Bestandteil des gehärteten Lackfilms werden.

Ester der Acrylsäure und der Methacrylsäure sind als Reaktivverdünner, u. a. auch für Alkydharze, bereits empfohlen worden. Methacrylsäureester der Formel

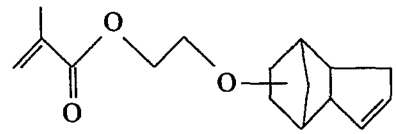

(I)

werden im Handel als Reaktivverdünner angeboten.

Auch Trienalkohole der Formel

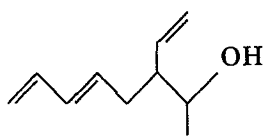

(II)

und daraus durch Umsetzung mit Aldehyden oder mit Phosgen erhältliche Acetale und Carbonate sind auf ihre Eignung als Reaktivverdünner für Alkydharze untersucht worden (S. Enomoto et al., J. Appl. Polym. Sci. 22, 253–265 (1978); DE-OS 26 27 472).

Die genannten Reaktivverdünner erfüllen jedoch höhere Anforderungen hinsichtlich der Reaktivität und/oder der Hydrolyse- bzw. Oxidationsbeständigkeit nicht, was sich in zu langer Trockenzeit von Lackzubereitungen und in Glanzverlust und Kreidung pigmentierter Lackierungen unter Witterungseinfluß auswirkt.

Gegenstand der Erfindung sind Verbindungen der Formel

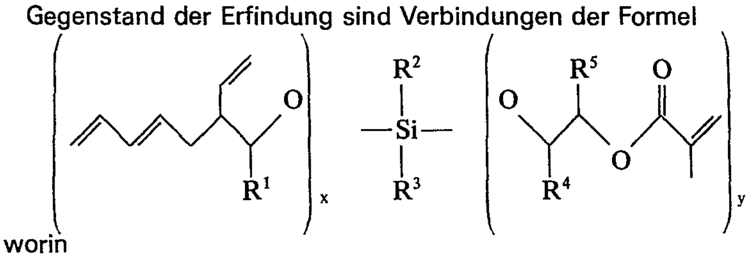

(III)

worin

$R^1$ einen aliphatischen, gegebenenfalls einfach ungesättigten, Rest mit 1 bis 18 C-Atomen, einen cycloaliphatischen, gegebenenfalls einfach ungesättigten, Rest mit 3 bis 12 C-Atomen, Benzyl, Syryl oder einen Arylrest mit 6 bis 12 C-Atomen bedeutet,

$R^2$ die Bedeutung von $R^1$ besitzt, wobei der Alkylrest auch durch eine Cyanogruppe oder eine $C_1$—$C_4$-Alkoxycarbonylgruppe substituiert sein kann,

$R^2$ vorzugsweise $C_1$—$C_4$-Alkyl oder Phenyl,

$R^4$ und $R^5$ unabhängig voneinander ein Wasserstoffatom, $C_1$—$C_4$-Alkyl oder Phenyl, vorzugsweise Methyl, bedeuten,

$R^3$ entweder die für $R^1$ oder $R^2$ angegebene Bedeutung hat oder

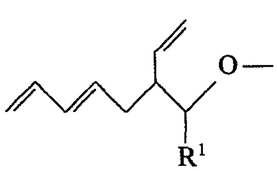

oder

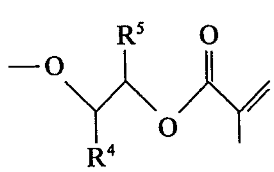

bedeutet und

x 1 oder 2,

y Null oder 1 und

x+y 2 bedeuten;

und Mischungen von unter Formel III fallenden Verbindungen.

Die erfindungsgemäßen Verbindungen III sowie ihre Mischungen übertreffen die Reaktivverdünner des Standes der Technik in einer oder mehreren der oben aufgezählten erwünschten Eigenschaften. Im Gegensatz zu den bisher bekannten Reaktivverdünnern gelingt es mit den erfindungsgemäßen Verbindungen, Lacke auf Alkydharzbasis herzustellen, die hohen Festkörpergehalt und rasche An- und Durchtrocknung zeigen und zu harten Lackfilmen führen, die nicht verspröden.

Weiterer Gegenstand der Erfindung ist ein Verfahren zur Herstellung der Verbindungen III und von Mischungen solcher Verbindungen durch Umsetzung von mindestens einer Verbindung der Formel

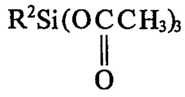
(IV)

oder

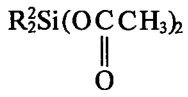
(V)

mit mindestens einer Verbindung der Formel

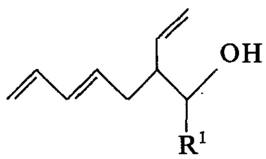
(VI)

und gegebenenfalls einer Verbindung oder mehreren Verbindungen der Formel

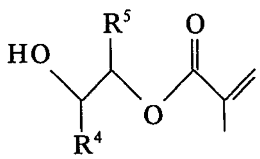
(VII)

wobei $R^1$, $R^2$, $R^4$ und $R^5$ die oben angegebene Bedeutung besitzen. $R^1$ und $R^2$ können gleich oder verschieden sein.

100%ige Umsetzung vorausgesetzt, wären pro Mol IV bzw. V x Mol VI und y Mol VII umzusetzen. Selbstverständlich kann die eine odere andere Komponente, vorzugsweise VI, im Überschuß (vorzugsweise 110—130% der berechneten Menge), eingesetzt werden, um Reaktivitätsunterschiede zwischen VII und VI auszugleichen, wobei das nicht umgesetzte Produkt nach Beendigung der Reaktion abgetrennt werden kann.

Die Reaktion wird in der Regel bei Temperaturen von 0 bis 150, vorzugsweise von 50 bis 110°C, durchgeführt.

Weiterer Gegenstand der Erfindung ist die Verwendung der Verbindungen III oder von Mischungen solcher Verbindungen als Reaktivverdünner für radikalisch polymerisierbare Lacksysteme, insbesondere für lufttrocknende Alkydharze.

Unter »radikalisch polymerisierbaren« Polymerisationen sollen z. B. durch Peroxide, Azoverbindungen oder durch Sauerstoff induzierte Polymerisationen verstanden werden.

Die als Ausgangsprodukte VI verwendeten Trienalkohole sind mindestens teilweise bekannt und können aus 2 Mol Butadien und 1 Mol Aldehyd in Gegenwart von Palladium(II)-salz und Triphenylphosphan gemäß S. Enomoto, loc. cit., oder nach Analogieverfahren hergestellt werden.

Bevorzugte Ausgangsverbindungen VI sind beispielsweise

1-Methyl-2-vinyl-hepta-4,6-dien-1-ol,
1-Isopropyl-2-vinyl-hepta-4,6-dien-1-ol,
1-Vinyl-2-vinyl-hepta-4,6-dien-1-ol,
1-Propyl-2-vinyl-hepta-4,6-dien-1-ol,
1-Isobutyl-2-vinyl-hepta-4,6-dien-1-ol,
1-Propenyl-2-vinyl-hepta-4,6-dien-1-ol,
1-Cyclohexyl-2-vinyl-hepta-4,6-dien-1-ol,
1-Cyclohex-3-en-yl-2-vinyl-hepta-4,6-dien-1-ol,
1-Phenyl-2-vinyl-hepta-4,6-dien-1-ol,
1-α-Naphthyl-2-vinyl-hepta-4,6-dien-1-ol,
1-β-Naphthyl-2-vinyl-hepta-4,6-dien-1-ol,
1-Benzyl-2-vinyl-hepta-4,6-dien-1-ol,
1-Styryl-2-vinyl-hepta-4,6-dien-1-ol

sowie Mischungen dieser Verbindungen.

Bevorzugte Verbindungen IV bzw. V zur Herstellung der erfindungsgemäßen Verbindungen III sind z. B.

Methyl-trisacetoxy-silan,
Ethyl-trisacetoxy-silan,
Propyl-trisacetoxy-silan,
tert.-Butyl-trisacetoxy-silan,
β-Cyanethyl-trisacetoxy-silan,
β-$C_1$—$C_4$-Alkoxycarbonylethyl-trisacetoxy-silan,
But-2-en-1-yl-trisacetoxy-silan,
Cyclohexyl-trisacetoxy-silan,
Phenyl-trisacetoxy-silan

und die entsprechenden disubstituierten Bisacetoxy-silane sowie Mischungen der genannten Verbindungen.

Bevorzugte Methacrylsäureester VII für die Herstellung der erfindungsgemäßen Verbindungen III sind beispielsweise

Methacrylsäure-2-hydroxyethylester,
Methacrylsäure-2-hydroxy-n-propylester,
Methacrylsäure-2-hydroxy-1-methyl-ethylester,
Methacrylsäure-2-hydroxy-n-butylester,
Methacrylsäure-2-hydroxy-1-ethyl-ethylester,
Methacrylsäure-2-hydroxy-2-phenyl-ethylester,
Methacrylsäure-2-hydroxy-1-phenyl-ethylester und
deren Mischungen.

Bei Mitverwendung von Verbindungen VII können die Ausgangskomponenten IV bzw. V, VI und VII gleichzeitig oder nacheinander in beliebiger Reihenfolge und gegebenenfalls bei verschiedenen Temperaturen zur Reaktion gebracht werden.

Die Umsetzung kann gegebenenfalls auch in Gegenwart von Lösungsmitteln durchgeführt werden. Bevorzugte Lösungsmittel für diesen Zweck sind beispielsweise Aromaten, wie Benzol, Toluol, Chlorbenzol; chlorierte Kohlenwasserstoffe, wie Methylenchlorid, Chloroform, Tetrachlorkohlenstoff, Ketone, wie Aceton; Ether, wie Diethylether, Dioxan, Tetrahydrofuran, Diethylenglykoldimethylether, Etherester, wie Ethylglykolacetat; Dimethylsulfoxid; Dimethylformamid.

Im allgemeinen kann man nach beendeter Reaktion überschüssige Ausgangskomponenten sowie die während der Reaktion entstandene Essigsäure und gegebenenfalls die Lösungsmittel durch Destillation, ggf. im Vakuum, entfernen.

»Lufttrocknende Alkydharze« sind Polyester, die mit halbtrocknenden oder trocknenden Ölen oder deren Fettsäuren modifiziert sind; vgl. Ullmanns Encyklopädie der technischen Chemie, 4. Aufl., Bd. 15, 616—625, Verlag Chemie, Weinheim 1978.

Für die Synthese dieser Alkydharze bevorzugte Alkohole sind aliphatische, cycloaliphatische und/oder araliphatische Alkohole mit 1—15, vorzugsweise 2—6 C-Atomen, und 1—6, vorzugsweise 1—4, an nicht-aromatische C-Atome gebundenen OH-Gruppen pro Molekül, z. B. Glykole wie Ethylenglykol, Propan-diol-1,2 und -1,3, Butandiol-1,2, -1,3 und -1,4,2-Ethylpropandiol-1,3, 2-Ethylhexandiol-1,3, Neopentylglykol, Hexandiol-1,6, Cyclohexandiol-1,2 und -1,4, 1,2- und 1,4-Bis-(hydroxymethyl)-cyclohexan, Adipinsäure-bis-(ethylenglykolester); Etheralkohole wie Di- und Triethylenglykol, Dipropylenglykol; oxethylierte und perhydrierte Bisphenole; Butantriol-1,2,4, Hexantriol-1,2,6, Trimethylolethan, Trimethylolpropan, Glycerin, Pentaerythrit, Dipentaerythrit, Mannit und Sorbit; kettenabbrechende einwertige Alkohole mit 1 bis 7 Kohlenstoffatomen wie Propanol, Butanol, Cyclohexanol und Benzylalkohol. Die gebräuchlichsten Alkohole sind Glycerin, Trimethylolpropan, Neopentylglykol und Pentaerythrit.

Für die Synthese der Alkydharze bevorzugte Säurekomponenten sind aliphatische, cycloaliphatische gesättigte oder ungesättigte und/oder aromatische mehrbasische Carbonsäuren, vorzugsweise Di-, Tri- und Tetracarbonsäuren, mit 2 bis 14, vorzugsweise 4 bis 12 C-Atomen pro Molekül oder deren veresterungsfähige Derivate (z. B. Anhydride oder Ester), z. B. Phthalsäureanhydrid, Isophthalsäure, Terephthalsäure, Tetrahydro- und Hexahydrophthalsäureanhydrid, Endomethylentetrahydrophthalsäure, Bernsteinsäure, Adipinsäure, Sebacinsäure, Trimellithsäure und Trimellithsäureanhydrid, Pyromellithsäureanhydrid und Maleinsäure. Phthalsäureanhydrid ist die gebräuchlichste Säurekomponente.

Für die Herstellung der Alkydharze bevorzugte Monocarbonsäuren sind aliphatische, cycloaliphatische, gesättigte und ungesättigte und/oder aromatische Monocarbonsäuren mit 3—24 C-Atomen pro Molekül wie Benzoesäure, p.-tert.-Butylbenzoesäure, Tolylsäure, Hexahydrobenzoesäure, Abtietinsäure und Milchsäure.

Die Öllänge der Alkydharze, berechnet als Triglycerid und bezogen auf das Alkydharz, kann 5 bis 80, vorzugsweise 20 bis 70 Gew.-% betragen. Die trocknenden oder halbtrocknenden Fettsäuren, die im allgemeinen 6 bis 24 C-Atome enthalten, können entweder als solche oder in Form ihrer Glycerinester (Triglyceride) eingesetzt werden.

Als bevorzugt sind pflanzliche und tierische Öle, Fette oder Fettsäuren zu nennen, wie z. B. Sonnenblumen-, Erdnuß-, Ricinen-, Holz-, Oliven-, Sojabohnen, Oiticica-, Lein-, Baumwollsaat-, Safflorööl oder -ölfettsäuren, dehydratisiertes Ricinusöl bzw. -fettsäure, einfach ungesättigte Fettsäuren, Schmalz, Talg und Trane, Tallölfettsäure sowie synthetische Fettsäuren, die durch Konjugierung oder Isomerisierung aus natürlichen ungesättigten Ölen oder Fettsäuren hergestellt sein können.

Unter »lufttrocknenden« Alkydharzen sollen hier auch solche mit trocknenden oder halbtrocknenden Ölen oder Fettsäuren modifizierte Polyester verstanden werden, die vorzugsweise (mit oder ohne Aminoplastharzen) eingebrannt werden.

Das als Zahlenmittel bestimmte Molekulargewicht der Alkydharze beträgt 2000—10000 (bis zu Molekulargewichten von 5000 dampfdruckosmometrisch bestimmt in Dioxan und Aceton, wobei bei differierenden Werten der niedrigere Wert als korrekt angesehen wird; bei Molekulargewichten über 5000 membranosmometrisch in Aceton bestimmt).

Der Gehalt an Reaktivverdünner, bezogen auf die Summe von lufttrocknendem Alkydharz und Reaktivverdünner, liegt in der Regel zwischen 5 und 50, vorzugsweise 15 und 40, Gew.-%.

Die erfindungsgemäßen Reaktivverdünner können auch im Gemisch mit üblichen Lacklösungsmitteln, wie aromatischen Kohlenwasserstoffen oder Benzinen, Butylacetat, usw. und vorzugsweise mit Ethylglykolacetat, eingesetzt werden.

Zur Verbesserung der Lagerstabilität können die Lacksysteme Inhibitoren, wie z. B. Hydrochinonmonomethylether, Benzochinon, alkylierte Phenole, Phenothiazin oder Oximverbindungen enthalten.

Die Aushärtung der erfindungsgemäße Reaktivverdünner enthaltenden Lacksysteme erfolgt in üblicher Weise bei Raumtemperatur oder erhöhten Temperaturen, etwa bei 60—80°C, unter Zusatz üblicher Metallsiccative, wie Salzen des Cobalts, Bleis, Mangans, Zirkoniums, Calciums oder Eisens, z. B. der 2-Ethyl-hexanoate oder Naphthenate.

Den mit den erfindungsgemäß als Reaktivverdünner wirkenden Verbindungen versetzten Lacksystemen können die aus der Lackharztechnologie bekannten Hilfsstoffe, z. B. Hautverhinderungsmittel, Verlaufmittel, Thixotropiermittel, Farbstoffe, sowie Pigmente zugesetzt werden.

Die mit den erfindungsgemäß zu verwendenden Reaktivverdünnern hergestellten Lacksysteme eignen sich zur Herstellung von Überzügen (Grundierungen oder Decklackierungen) auf den verschiedensten Untergründen, wie z. B. Holz, Metall oder Kunststoffen.

Die in den nachfolgenden Beispielen genannten Teile sind Gewichtsteile; Prozentangaben beziehen sich auf das Gewicht.

## Beispiele

### A) Herstellung der erfindungsgemäßen Verbindungen

### Beispiel 1

33 Teile Methyl-trisacetoxy-silan werden bei 80°C unter Stickstoffatmosphäre zur Stabilisierung mit 0,003 Teilen Toluhydrochinon versetzt. Innerhalb einer halben Stunde gibt man 91,2 Teile 1-Methyl-2-vinyl-hepta-4,6-dien-1-ol zu. Man rührt 2 Stunden bei 80°C und destilliert bei einem Druck von 0,133 bis 2,66 mbar (0,1 bis 2 Torr) bis zu einer Sumpftemperatur von 120°C. Das Destillat (54,6 Teile) besteht aus Essigsäure und überschüssige eingesetztem Trienalkohol. Als Rückstand verbleiben 64,2 Teile eines gelblichen Öls der Konstitution

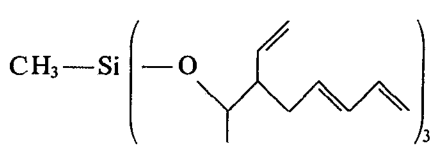

### Beispiel 2

Zu einer auf 80°C erhitzten Mischung aus 36 Teilen Methacrylsäure-2-hydroxy-propylester und 100 Teilen 1-Methyl-2-vinyl-hepta-4,6-dien-1-ol gibt man 0,009 Teile Toluhydrochinon und tropft 55 Teile Methyl-trisacetoxy-silan zu. Man rührt noch 2 Stunden bei 90°C und destilliert im Hochvakuum bis zum Erreichen einer Sumpftemperatur von 90°C 74,2 Teile Destillat ab. Als Rückstand verbleiben 110 Teile gelbliches Öl der Konstitution

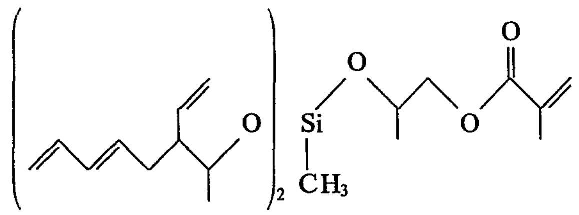

## Beispiel 3

Analog Beispiel 1 setzt man 55 Teile Methyl-trisacetoxysilan mit 50 Teilen 1-Methyl-2-vinyl-hepta-4,6-dien-1-ol und 72 Teilen Methacrylsäure-2-hydroxypropylester um. Nach Abdestillieren von 30,8 Teilen verbleiben 118,5 Teile eines gelblichen Öls mit einem Brechungsindex $n_{20}^{D} = 1,4683$ der Konstitution

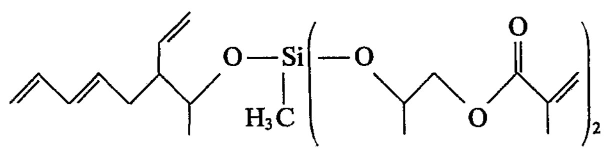

## B) Trocknungsprüfung in Mischung mit Alkydharz

### Herstellung der Alkydharzlösung

Aus 23,5 Teilen eines handelsüblichen Sojafettsäurealkydharzes mit einer Öllänge von 48%, einem Gehalt an Phthalsäureresten von 26% (berechnet als Phthalsäureanhydrid), einer Säurezahl von 10 und einer Viskosität von 4000 mPas (gemessen als 65gew.-%ige Lösung im Xylol), 9,5 Teilen Testbenzin und 10 Teilen Reaktivverdünner wird unter Verwendung von 0,28 Teilen Cobaltoctoat-Lösung (in Toluol, 6% Metallgehalt), 1,4 Teilen Bleioctoat-Lösung (in Toluol, 24% Metallgehalt) und 0,50 Teilen Hautverhinderungsmittel auf Butanonoxim-Basis eine Lacklösung hergestellt.

Als Vergleichs-Reaktivverdünner X wurde ein Handelsprodukt der Formel

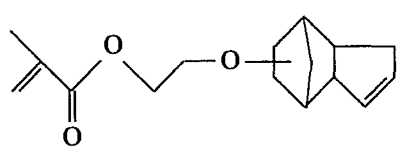

eingesetzt. Die Reaktivverdünner der Beispiele 1—3 werden als Reaktivverdünner 1—3 bezeichnet.

Die nachfolgenden Angaben über die Trocknung erfolgen nach einer betriebsinternen Skala, wobei mit fortschreitender Trocknung die Werte abfallen. Ein Wert von 2 bis 2+ entspricht dem Begriff »staubtrocken«, ein Wert von Null dem Begriff »klebfrei« der DIN 53 150.

Mit Hilfe einer Filmziehhantel (Spalthöhe 120 μm) werden auf Glasplatten Klarlacke aufgebracht. An den resultierenden Filmen werden die Trocknung und nach erfolgter Trocknung die Pendelhärte bestimmt. Die Ergebnisse sind in der folgenden Tabelle aufgeführt.

Tabelle 1

| Reaktiv-verdünner | Trocknung nach | | | | | | | Pendelhärte (s) nach | |
|---|---|---|---|---|---|---|---|---|---|
| | 1/2 h | 1 h | 2 h | 3 h | 4 h | 5 h | 6 h | 24 h | 48 h |
| X | | 4 | 4 | 3 | 2 | 1 | 0 | 19,0 | 20,0 |
| 1 | 4 | 4 | 2 | 1 | 0 | 0 | 0 | 15,0 | 19,0 |
| 2 | 4 | 4 | 3 | 2 | 0 | 0 | 0 | 20,0 | 25,5 |
| 3 | 4 | 4 | 4 | 2 | 1 | 0 | 0 | 17,0 | 22,0 |

**Patentansprüche**

1. Verbindungen der Formel

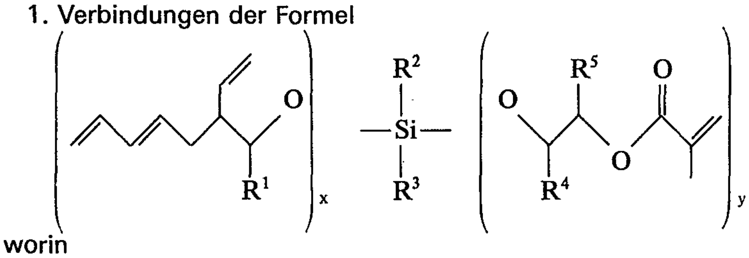

(III)

worin

$R^1$ einen aliphatischen, gegebenenfalls einfach ungesättigten, Rest mit 1 bis 18 C-Atomen, einen cycloaliphatischen, gegebenenfalls einfach ungesättigten, Rest mit 3 bis 12 C-Atomen, Benzyl, Styryl oder einen Arylrest mit 6 bis 12 C-Atomen bedeutet,
$R^2$ die Bedeutung von $R^1$ besitzt, wobei der Alkylrest auch durch eine Cyanogruppe oder eine $C_1$—$C_4$-Alkoxycarbonylgruppe substituiert sein kann,
$R^4$ und $R^5$ unabhängig voneinander ein Wasserstoffatom, $C_1$—$C_4$-Alkyl oder Phenyl bedeuten,
$R^3$ entweder die für $R^1$ oder $R^2$ angegebene Bedeutung hat oder

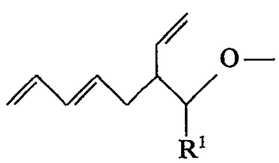

oder

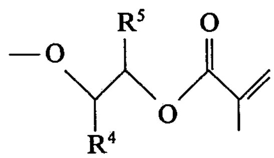

bedeutet und

x 1 oder 2,
y Null oder 1 und
x+y 2 bedeuten;

und Mischungen von unter Formel III fallenden Verbindungen.

2. Verbindungen und Mischungen nach Anspruch 1, dadurch gekennzeichnet, daß $R^2$ für $C_1$—$C_4$-Alkyl oder Phenyl steht.

3. Verbindungen und Mischungen nach Anspruch 1, dadurch gekennzeichnet, daß $R^4$ Methyl bedeutet.

4. Verbindungen und Mischungen nach Anspruch 1, dadurch gekennzeichnet, daß $R^5$ Methyl bedeutet.

5. Verfahren zur Herstellung der Verbindungen und Mischungen nach Ansprüchen 1—4 durch Umsetzung von mindestens einer Verbindung der Formel

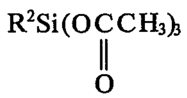

oder

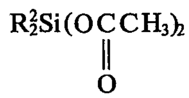

(IV) (V)

mit mindestens einer Verbindung der Formel

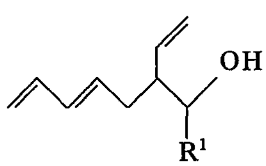

(VI)

und gegebenenfalls einer Verbindung oder mehreren Verbindungen der Formel

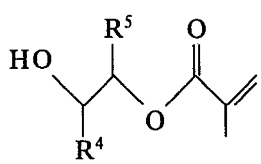

(VII)

wobei $R^1$, $R^2$, $R^4$ und $R^5$ die in den Ansprüchen 1—4 angegebene Bedeutung besitzen.

6. Verwendung der Verbindungen und Mischungen nach Ansprüchen 1—4 als Reaktivverdünner für radikalisch polymerisierbare Lacksysteme.

7. Verwendung nach Anspruch 6 als Reaktivverdünner für lufttrocknende Alkydharze.

## Claims

1. Compounds of the formula

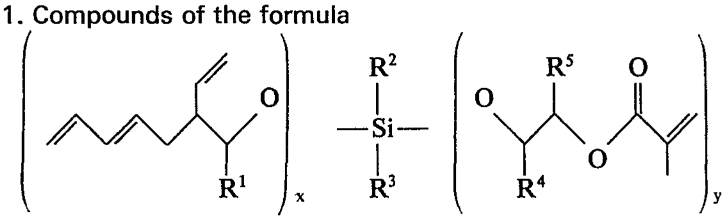

(III)

wherein

$R^1$ denotes an aliphatic, optionally mono-unsaturated radical with 1 to 18 C atoms, a cycloaliphatic, optionally mono-unsaturated radical with 3 to 12 C atoms, benzyl, styryl or an aryl radical with 6 to 12 C atoms,

$R^2$ has the meaning of $R^1$, it being possible for the alkyl radical also to be substituted by a cyano group or a $C_1$—$C_4$-alkoxycarbonyl group,

$R^4$ and $R^5$ independently of each other denote a hydrogen atom, $C_1$—$C_4$-alkyl or phenyl,

$R^3$ either has the meaning given for $R^1$ or $R^2$ or denotes

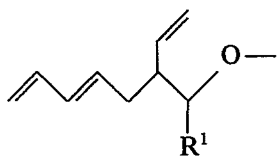

or

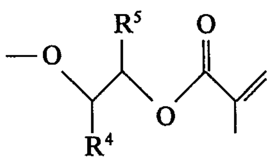

and

x denotes 1 or 2,

y denotes zero or 1 and

x+y denotes 2;

and mixtures of compounds falling under formula III.

2. Compounds and mixtures according to Claim 1, characterised in that $R^2$ represents $C_1$—$C_4$-alkyl or phenyl.

3. Compounds and mixtures according to Claim 1, characterised in that $R^4$ denotes methyl.

4. Compounds and mixtures according to Claim 1, characterised in that $R^5$ denotes methyl.

5. Process for the preparation of the compounds and mixtures according to Claims 1—4 by reacting at least one compound of the formula

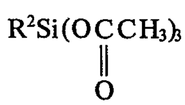

or

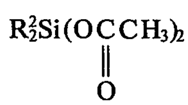

(IV) (V)

with at least one compound of the formula

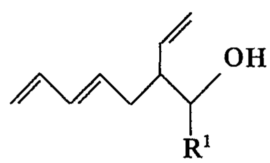

(VI)

and optionally one compound or several compounds of the formula

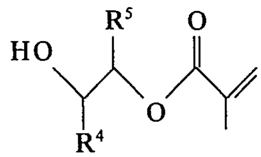

(VII)

wherein $R^1$, $R^2$, $R^4$ and $R^5$ have the meaning given in Claims 1—4.

6. Use of the compounds and mixtures according to Claims 1—4 as reactive diluents for radical-polymerisable lacquer systems.

7. Use according to Claim 6 as reactive diluents for air-drying alkyd resins.

**Revendications**

1. Composés de formule

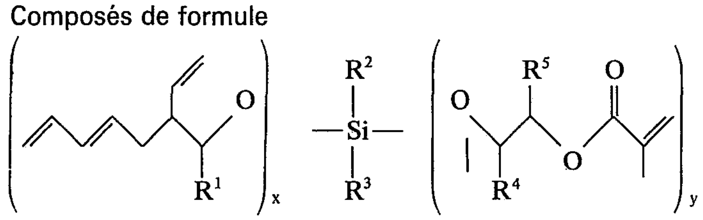

(III)

dans laquelle

$R^1$ représente un reste aliphatique en $C_1$—$C_{18}$ éventuellement mono-insaturé, un reste cycloaliphatique en $C_3$—$C_{12}$ éventuellement mono-insaturé, un reste benzyle, un reste styryle ou un reste aryle en $C_6$—$C_{12}$,
$R^2$ a la signification de $R^1$, le reste alkyle pouvant aussi être substitué par un groupe cyano ou un groupe (alcoxy en $C_1$—$C_4$)-carbonyle,
$R^4$ et $R^5$ représentent indépendamment l'un de l'autre un atome d'hydrogène ou un groupe alkyle en $C_1$—$C_4$ ou phényle,
$R^3$ a la signification indiquée soit pour $R^1$, soit pour $R^2$ ou bien représente

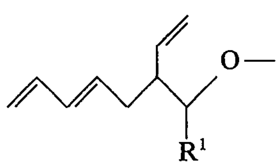

ou

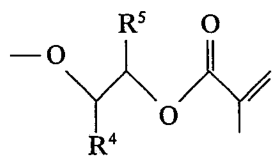

et

x est égal à 1 ou 2,
y est égal à 0 ou 1, et la somme
x+y est égale à 2; et

des mélanges de composés répondant à la formule III.

2. Composés et mélanges selon la revendication 1, caractérisés en ce que $R^2$ est un groupe alkyle en $C_1$—$C_4$ ou phényle.

3. Composés et mélanges selon la revendication 1, caractérisés en ce que $R^4$ est un groupe méthyle.

4. Composés et mélanges selon la revendication 1, caractérisés en ce que $R^5$ est un groupe méthyle.

5. Procédé pour la fabrication des composés et mélanges selon les revendications 1 à 4 par réaction d'au moins un composé de formule

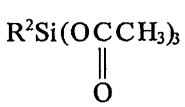

ou

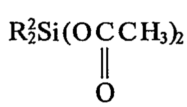

(IV) (V)

avec au moins un composé de formule

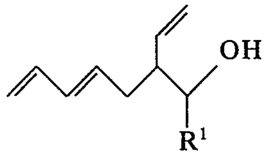

(VI)

et éventuellement un ou plusieurs composés de formule

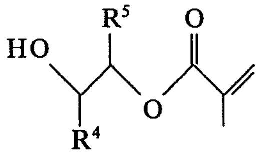

(VII)

dans lesquelles $R^1$, $R^2$, $R^4$ et $R^5$ ont la signification indiquée ci-dessus. Les restes $R^1$ et $R^2$ peuvent être identiques ou différents.

6. Utilisation des composés et mélange selon les revendications 1 à 4 comme diluants réactifs pour systèmes de vernis copolymérisables par les radicaux.

7. Utilisation selon la revendication 6 comme diluants réactifs pour résines alkydiques séchant à l'air.